# FASCICULE DE BREVET EUROPEEN

(11) **EP 2 274 550 B1**
(45) Date de publication et mention de la délivrance du brevet: **07.09.2011**
(21) Numéro de dépôt: 09731368.8
(22) Date de dépôt: 21.03.2009
(51) Int. Cl.: F16L 37/088

(54) **RACCORD DE CONNECTEUR POUR CONDUITS DE FLUIDE AVEC UN RESSORT EN FIL METALLIQUE**
KUPPLUNG FÜR EINEN STECKVERBINDER FÜR FLÜSSIGKEITSROHRE MIT EINER METALLDRAHTFEDER
COUPLING FOR A CONNECTOR FOR FLUID PIPES WITH A METAL WIRE SPRING

(30) Priorité: 07.04.2008 FR 0801900
(43) Date de publication de la demande: 19.01.2011
(73) Titulaire: A. RAYMOND ET CIE, 38000 Grenoble (FR)
(72) Inventeur: CHAUPIN, Jérome, 38830 Saint Pierre d'Allevard (FR)
(74) Mandataire: Rüttgers, Joachim
(86) Numéro de dépôt international: PCT/EP2009/002093
(87) Numéro de publication internationale: WO 2009/124645

(56) Documents cités:
- EP-A- 0 740 100
- WO-A-2005/059426
- US-A1- 2006 082 146
- US-A1- 2007 040 377

## Description

L'invention concerne un raccord de connecteur pour conduits de fluide, en particulier des conduits utilisés en automobile dans les injecteurs de carburants.

L'invention s'applique plus particulièrement à un raccord de connecteur pour conduits de fluide, comprenant une embase tubulaire femelle dans laquelle est destiné à s'insérer selon une certaine direction axiale un embout tubulaire mâle pour réaliser un raccordement étanche, un organe de blocage à déformation élastique pour bloquer l'embout dans l'embase quand l'embout est suffisamment enfoncé dans l'embase selon la direction axiale, et un manchon de verrouillage qui est monté mobile selon la direction axiale autour de l'organe de blocage de telle façon à occuper une première position axiale dans laquelle il laisse l'organe de blocage libre de se déformer radialement vers l'extérieur de l'embase et une seconde position axiale dans laquelle il empêche la déformation radiale de l'organe de blocage.

On connaît du document WO2005/059426 un tel raccord de connecteur pour conduits de fluide, dans lequel l'organe de blocage est constitué par un ensemble de bras rigides élastiquement déformables disposés en forme de tulipe dans le prolongement de l'embase tubulaire. Quand le manchon de verrouillage occupe la première position, les bras sont libres de s'écarter pour laisser passer l'embout mâle dans l'embase. Ils se referment ensuite (en revenant dans leur position de repos) dans une gorge périphérique de l'embout mâle afin de le bloquer dans l'embase. Dans sa seconde position de verrouillage, le manchon entoure les bras élastiques, en empêchant ceux-ci de s'écarter pour libérer l'embout mâle. Le document EP 0740100 montre un autre raccord connu.

L'invention vise à fournir un autre agencement pour un tel raccord qui présente en outre une réalisation compacte et robuste.

A cet effet, l'invention a pour objet un raccord de connecteur pour conduits de fluide, comprenant une embase tubulaire femelle dans laquelle est destiné à s'insérer selon une certaine direction axiale un embout tubulaire mâle pour réaliser un raccordement étanche, un organe de blocage à déformation élastique pour bloquer l'embout dans l'embase quand l'embout est suffisamment enfoncé dans l'embase selon la direction axiale, et un manchon de verrouillage qui est monté mobile selon la direction axiale autour de l'organe de blocage de telle façon à occuper une première position axiale dans laquelle il laisse l'organe de blocage libre de se déformer radialement vers l'extérieur de l'embase et une seconde position axiale dans laquelle il empêche la déformation radiale de l'organe de blocage, caractérisé en ce que l'organe de blocage est un fil rigide en forme de C ayant deux extrémités libres recourbées l'une vers l'autre aptes à traverser l'embase quand il est déformé radialement, en ce que le manchon présente au moins un renfoncement intérieur radial dans lequel s'efface chaque extrémité libre correspondante de l'organe de blocage quand ce dernier est déformé radialement et que le manchon occupe ladite première position axiale, chaque renfoncement étant décalé axialement par rapport à l'extrémité libre correspondante de l'organe de blocage quand le manchon occupe ladite seconde position axiale, ce qui empêche la déformation radiale de l'organe de blocage.

Le raccord selon l'invention permet un raccordement étanche rapide de l'embout mâle dans l'embase femelle. Avec un tel agencement du raccord, on peut verrouiller l'organe de blocage par une faible course de déplacement axial du manchon de verrouillage sur l'embase, cette course correspondant sensiblement au diamètre du fil rigide formant l'organe de blocage.

Avantageusement, le verrouillage de l'embout mâle dans l'embase femelle ne peut être réalisé que suite à une insertion complète de l'embout mâle dans l'embase femelle, ce qui apporte une sécurité au raccordement étanche. En effet, tant que l'embout mâle n'est que partiellement inséré dans l'embase femelle, l'organe de blocage empêche un déplacement axial du manchon de verrouillage sur l'embase.

Un raccord de connecteur pour conduits de fluide selon l'invention peut présenter avantageusement les particularités suivantes :
- le fil rigide est un fil métallique, qui a l'avantage de présenter une bonne tenue en température ;
- le manchon de verrouillage présente un corps tubulaire prolongé axialement par une patte, la patte ayant une extrémité libre qui saille par rapport à l'embase quand le manchon occupe ladite première position axiale et qui affleure l'embase quand le manchon occupe ladite seconde position axiale. Cette construction constitue avantageusement un témoin visuel et tactile du verrouillage correct du manchon sur l'embase, et donc de l'étanchéité du raccord ;
- l'embase présente un cran qui s'insère dans une encoche prévue sur la patte du manchon quand le manchon occupe ladite seconde position axiale, ce qui apporte une sécurité contre un déverrouillage inopiné du raccord ;
- le manchon comporte une fente radiale pour l'insertion radiale dudit organe de blocage dans l'embase de telle sorte que le raccord selon l'invention formé de trois éléments séparés peut être monté très facilement.

L'invention s'étend à un connecteur pour conduits de fluide, comprenant un embout tubulaire et un raccord selon l'invention.

La présente invention sera mieux comprise et d'autres avantages apparaîtront à la lecture de la description détaillée d'un mode de réalisation pris à titre d'exemple nullement limitatif et illustré par les dessins annexés.
La figure 1 est une vue en coupe longitudinale selon l'axe I-I de la figure 2 du connecteur selon l'invention dans la première position axiale du manchon et quand l'embout mâle est partiellement inséré dans l'embase femelle.
La figure 2 est une vue en coupe transversale selon l'axe II-II de la figure 1 du connecteur selon l'invention dans la même position que dans la figure 1.
La figure 3 est une vue en coupe longitudinale selon l'axe III-III de la figure 4 du connecteur selon l'invention dans la première position axiale du manchon et quand l'embout mâle est complètement inséré dans l'embase femelle.
La figure 4 est une vue en coupe transversale selon l'axe IV-IV de la figure 3 du connecteur selon l'invention dans la même position que dans la figure 3.
La figure 5 est une vue en coupe longitudinale selon l'axe V-V de la figure 6 du connecteur selon l'invention dans la seconde position axiale du manchon.
La figure 6 est une vue en coupe transversale selon l'axe VI-VI de la figure 5 du connecteur selon l'invention dans la même position que dans la figure 5.
La figure 7 est une vue en perspective du connecteur selon l'invention dans la première position axiale du manchon et quand l'embout mâle est séparé de l'embase femelle.
La figure 8 est une vue en perspective du connecteur selon l'invention dans la seconde position axiale du manchon et quand l'embout mâle est complètement inséré dans l'embase femelle.
La figure 9 est une vue en perspective du connecteur selon l'invention dans un autre mode de réalisation dans la première position axiale du manchon et quand l'embout mâle est séparé de l'embase femelle.
La figure 10 est une vue en perspective du connecteur selon l'invention dans un autre mode de réalisation dans la seconde position axiale du manchon et quand l'embout mâle est complètement inséré dans l'embase femelle.
La figure 11 est une vue en coupe transversale selon l'axe XI-XI de la figure 9 du connecteur selon l'invention dans la même position que dans la figure 9.
La figure 12 est une vue en coupe transversale selon l'axe XII-XII de la figure 10 du connecteur selon l'invention dans la même position que dans la figure 10.

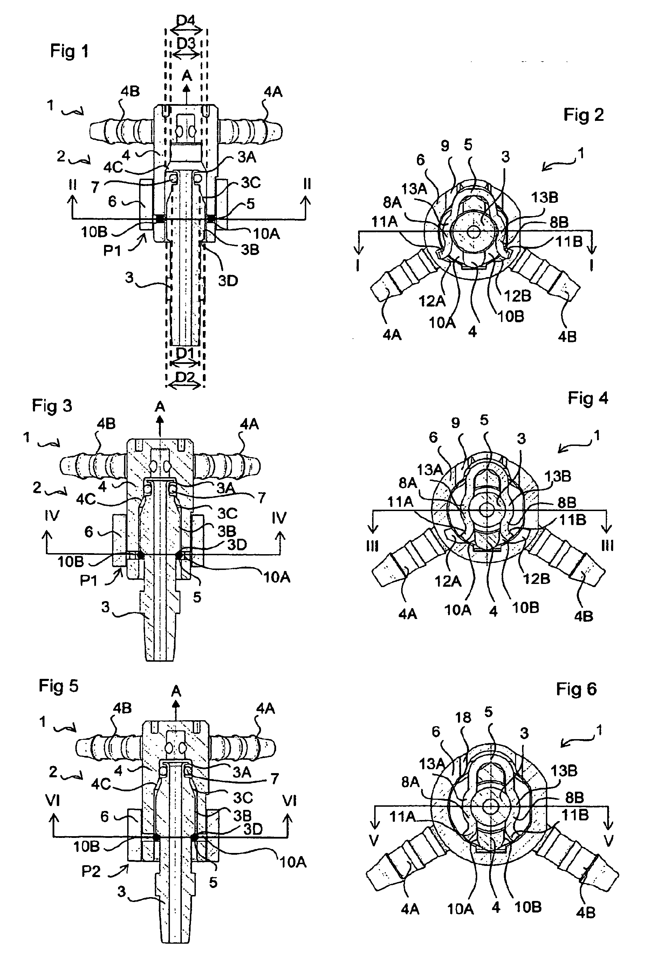

Sur la figure 1, on a représenté un connecteur 1 pour conduits de fluide selon l'invention comprenant un raccord 2 et un embout tubulaire mâle 3.

Le raccord 2 selon l'invention comprend une embase tubulaire femelle 4 dans laquelle est destinée à s'insérer l'embout tubulaire mâle 3 selon une direction axiale indiquée par la flèche A, un organe de blocage 5 à déformation élastique inséré dans l'embase femelle 4 et un manchon de verrouillage 6 sous la forme d'un corps tubulaire monté autour de l'embase femelle 4 et de l'organe de blocage 5 en étant mobile selon la direction axiale A.

Sur la figure 1, l'embout mâle 3 est présenté partiellement inséré dans l'embase femelle 4.

Comme on peut le voir sur la figure 1, l'embase femelle 4 est équipée Ici, dans sa partie supérieure opposée axialement à son ouverture pour l'insertion de l'embout mâle, de deux voies 4A,4B de conduite de fluide destinées à être raccordées à l'embout mâle 3. II est évident que l'embase femelle 4 pourrait être munie d'une ou de plus de deux voies de conduite de fluide.

L'embase femelle 4 peut être en outre avantageusement équipée sur sa paroi externe d'une rainure ou nervure de guidage coopérant avec une nervure ou une rainure correspondante (non représentées) prévue sur la paroi Interne du manchon de verrouillage pour faciliter le guidage axial du manchon 6 sur l'embase 4.

L'embout mâle 3 se présente sous la forme d'un tube sensiblement cylindrique ayant sur sa longueur des variations de diamètres externes. Plus particulièrement, il comporte une portion de longueur d'extrémité 3A formant une gorge ayant un premier diamètre indiqué par D1 sur la figure 1, cette portion 3A est destinée à s'insérer dans le fond de l'embase femelle 4. Un joint d'étanchéité torique 7 entoure cette portion 3A.

La portion 3A est prolongée par une seconde portion de longueur 3B ayant un diamètre D2 supérieur au diamètre D1, les deux portions 3A,3B étant reliées par une portion intermédiaire 3C tronconique de faible pente (augmentation du diamètre). Comme cela sera décrit par la suite, la pente faible de la portion 3C permet de déformer progressivement l'organe de blocage 5 radialement vers l'extérieur de l'embase 4.

L'embout mâle 3 présente encore dans le prolongement immédiat de la portion 3B, une autre portion intermédiaire 3D tronconique (rétrécissement de diamètre) qui précède un troisième portion cylindrique (non référencée) ayant un diamètre plus petit que D2 et légèrement plus grand que D1. La pente de la portion 3D est plus rapide que celle de la portion 3C pour réaliser une sorte d'épaulement pour l'organe de blocage 5 comme décrit plus bas.

L'embase femelle 4 comporte un alésage axial 4C ayant des diamètres internes D3, D4 complémentaires aux diamètres externes D1, D2 de l'embout mâle 3. Quand l'embout mâle 3 est complètement inséré dans l'embase femelle 4, le joint d'étanchéité 7 est comprimé dans l'alésage de l'embase femelle 4 (au niveau de la portion de l'alésage de diamètre D3) pour réaliser un raccordement étanche. L'alésage de l'embase comporte également une portion tronconique complémentaire à la portion 3C de l'embout mâle qui sert au centrage de l'embout mâle dans l'embase femelle.

On a représenté sur la figure 2 le connecteur 1 selon l'invention en coupe transversale dans la même position que sur la figure 1, ce qui permet de mieux voir l'agencement de l'organe de blocage 5 dans l'embase femelle 4 et dans le manchon de verrouillage 6.

L'organe de blocage 5 est ici un ressort qui se présente sous la forme d'une agrafe en fil rigide en forme de C dont les deux extrémités libres 8A,8B sont recourbées l'une vers l'autre. Cette agrafe à déformation élastique peut être un fil rond ou plat métallique. Elle est montée dans le raccord 2 en étant passée latéralement dans une fente radiale 9 aménagée dans le manchon de verrouillage 6 puis dans deux découpes latérales 10A, 10B de l'embase 4 de telle sorte que ses extrémités libres recourbées 8A, 8B viennent entourer le manchon mâle 3 dans l'alésage 4C. Comme visible sur la figure 2, les extrémités libres 8A,8B de l'agrafe 5 forment deux S symétriques, les bouts d'extrémité 11A, 11 B recourbées radialement vers l'extérieur des extrémités libres 8A, 8B s'effaçant respectivement dans deux renfoncements intérieurs radiaux correspondants 12A,12B du manchon 6 et les parties médianes 13A, 13B des extrémités libres 8A, 8B venant encercler le manchon mâle.

Sur la figure 2, l'agrafe 5 est déformée radialement vers l'extérieur de l'embase 4 autour de la portion de longueur 3B de grand diamètre D2 et le manchon de verrouillage 6 occupe une première position axiale, indiquée par la flèche P1 sur la figure 1, dans laquelle il laisse l'organe de blocage 5 libre de se déformer radialement vers l'extérieur de l'embase 4. Au repos, les parties médianes 13A, 13B de l'agrafe 5 définissent un cercle de diamètre intérieur sensiblement égal à D1.

Dans une première phase d'insertion de l'embout mâle 3 dans l'embase femelle 4, la portion de longueur 3A entourée du joint 7 (d'un diamètre extérieur sensiblement égale à D1) traverse l'agrafe. Puis la portion tronconique 3C de l'embout mâle exerce sur l'agrafe une contrainte de déformation radiale ce qui provoque l'enfoncement des bouts 11A,11B des extrémités 8A, 8B dans les renfoncements 12A, 12B du manchon 6. Puis l'agrafe 5 vient entourer la portion de longueur 3B de diamètre D2. Dans cette position déformée, l'agrafe 5 empêche un déplacement axial du manchon 6. Les renfoncements radiaux 12A, 12B ont une hauteur selon la direction axiale qui est légèrement plus grande que la hauteur de l'agrafe (diamètre du fil par exemple) mais qui est inférieure à la course du manchon selon cette direction axiale.

Les figures 3 et 4 représentent maintenant l'embout mâle complètement inséré dans l'embase femelle 4. La portion tronconique 3D de rétrécissement de diamètre de l'embout mâle est maintenant face à l'agrafe 5. Le joint 7 est comprimé dans l'alésage 4C de l'embase. Les extrémités libres de l'agrafe 8A, 8B sont ramenées élastiquement vers leur position de rappel (position de repos) et sont en dehors des renfoncements 10A, 10B.

Dans sa position de rappel, l'agrafe exerce une force axiale sur la portion tronconique 3D qui tend à pousser l'embout mâle dans le fond de l'alésage de l'embase femelle.

Sur les figures 5 et 6, le manchon de verrouillage 6 a été déplacé axialement (ici vers le bas de l'embase) de sa position initiale P1 vers une seconde position P2 pour décaler axialement les renfoncements 10A, 10B des bouts 11A, 11B des extrémités 8A, 8B de l'agrafe 5 ce qui empêche une déformation radiale de l'agrafe 5 et ce qui verrouille donc l'embout mâle dans l'embase femelle.

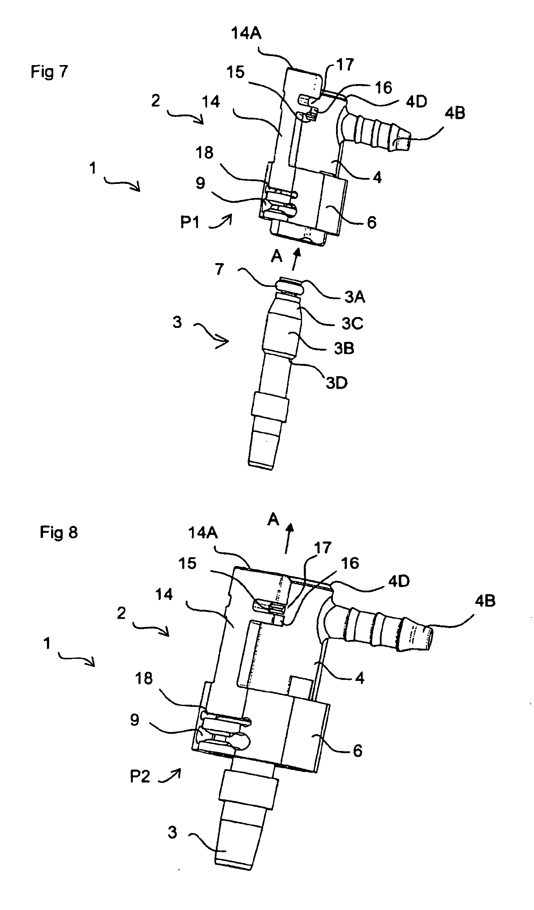

On a représenté en perspective le connecteur selon l'invention sur les figures 7 et 8, respectivement avec l'embout mâle séparé de l'embase et avec l'embout mâle inséré dans l'embase. Sur la figure 7, le manchon de verrouillage 6 est dans sa position P1 pour l'insertion de l'embout mâle dans l'embase femelle et sur la figure 8, le manchon de verrouillage 6 est dans sa position P2 de verrouillage de l'embout mâle dans l'embase femelle.

Comme visible sur les figures 7 et 8, le manchon de verrouillage 6 comporte un tronc cylindrique surmonté d'une patte 14 s'étendant axialement. Dans la position P1 du manchon de verrouillage 6, l'extrémité libre 14A de la patte 14 saille par rapport à l'embase femelle 4. Cette extrémité libre 14A de la patte 14 sert de surface d'appui pour déplacer le manchon 6 de la position P1 vers la position P2. Dans la position P2 du manchon de verrouillage 6, l'extrémité 14A de la patte 14 affleure l'embase femelle 4, ce qui est facilement décelable tactilement et visuellement pour vérifier le verrouillage de l'embout mâle dans l'embase femelle.

Comme visible sur les figures 7 et 8, l'embase 4 présente un cran 15 en forme de bossage et la patte 14 du manchon de verrouillage 6 présente une encoche 17. Dans la position P1 du manchon de verrouillage, le cran 15 est en butée contre une face 16 de l'encoche 17 ce qui bloque le déplacement du manchon 6 selon la direction axiale A (vers le bas de l'embase). Dans la position P2 du manchon de verrouillage, le cran 15 est dans l'encoche 17 ce qui bloque le déplacement du manchon 6 selon la direction axiale A (vers le haut de l'embase). Le déplacement du manchon de verrouillage 6 de la position P1 vers la position P2 et inversement nécessite d'exercer sur la patte 14 une certaine force axiale. Les dimensions du cran 15 et de l'encoche 17 sont ajustées pour correspondre à la course axiale du manchon entre les deux positions P1 et P2 ce qui équivaut sensiblement à l'épaisseur de l'agrafe 5 selon la direction axiale.

On a représenté sur les figures 7 et 8, la fente radiale 9 dans le manchon qui sert à la mise en place de l'agrafe 5 dans l'embase et aussi une fine fente 18 qui sert au positionnement axial de la tête de l'agrafe 5 dans le manchon quand le manchon de verrouillage 6 est dans la position P2. La distance axiale entre les fentes 9 et 18 est identique à la course axiale du manchon 6 entre les positions P1 et P2.

Pour raccorder l'embout mâle 3 dans l'embase femelle 4 du raccord 2 selon l'invention, on vient donc déformer élastiquement l'agrafe 5 pour laisser passer un diamètre de centrage D3 de l'embout mâle 3. Au contact de ce diamètre D3, l'agrafe 5 atteint une position de flexion maximale. Dans cette position, l'agrafe 5 interagit avec le manchon de verrouillage 6 en venant se loger dans les renfoncements 12A,12B prévus dans le manchon 6. Les extrémités 11A,11B de l'agrafe 5 ainsi positionnées font office de butée axiale à la descente du manchon de verrouillage 6 ce qui garantit mécaniquement un verrouillage uniquement quand l'agrafe 5 est revenue en position de repos lors du passage d'un diamètre plus petit de l'embout 3 que le diamètre de centrage. Dans cette position de repos, l'agrafe 5 est refermée derrière un épaulement 3D de l'embout mâle 3 et le manchon de verrouillage 6 peut venir se bloquer par un déplacement axial.

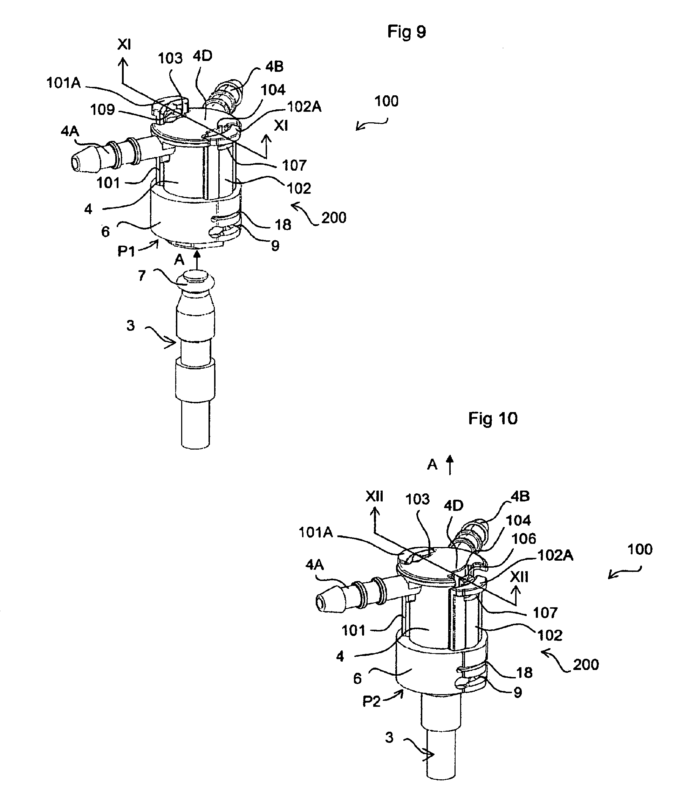

Les figures 9 à 12 illustrent une variante de réalisation d'un connecteur 100 selon l'invention avec un raccord 200 comportant un manchon de verrouillage 6 à deux pattes 101, 102 diamétralement opposées et décalées axialement, la patte 101 étant légèrement plus longue que la patte 102.

Sur la figure 9, l'embout mâle 3 est séparé du raccord 200 et le manchon de verrouillage 6 occupe la première position axiale P1. On voit sur cette figure 9, que les deux pattes sont guidées axialement dans deux glissières 103,104 diamétralement opposées et aménagées dans la paroi extérieure de l'embase femelle 4.

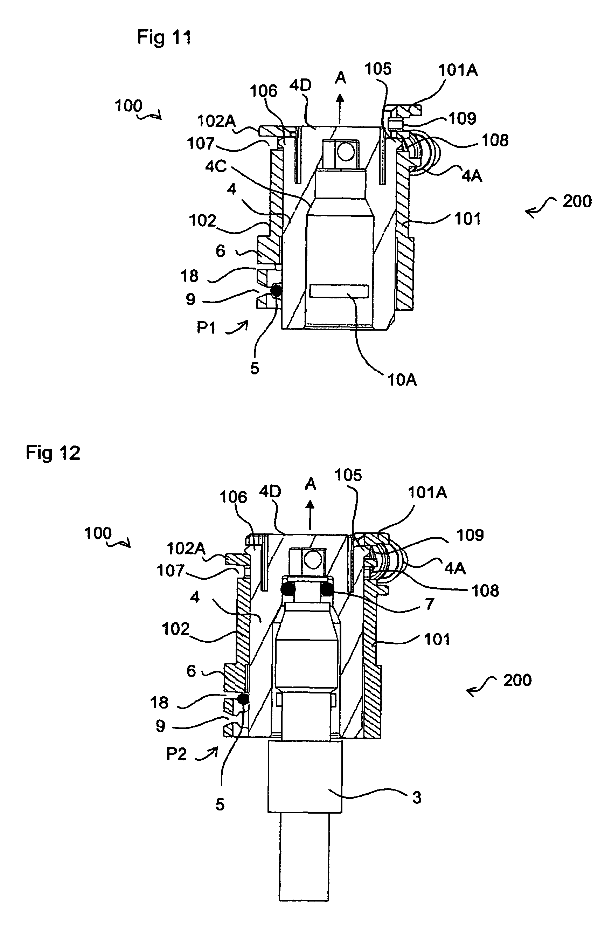

Les pattes 101,102 ont respectivement une extrémité libre 101A,102A, l'extrémité libre 101A de la patte 101 étant saillante par rapport à l'embase femelle 4, alors que l'extrémité libre 102A de la patte 102 affleure l'embase femelle 4 au niveau de la surface 4D supérieure de l'embase femelle 4. Comme visible sur la figure 11, les pattes 101,102 sont bloquées dans cette position par deux crans 105,106 respectifs formés dans les glissières 103,104 respectives de l'embase femelle 4 coopérant avec deux encoches 107,108 en forme de fente respectives aménagées dans les pattes 101,102, ce qui bloque le déplacement du manchon 6 selon la direction axiale A en position P1.

La figure 10 représente le connecteur 100 selon l'invention avec l'embout mâle 3 complètement inséré dans le raccord 2, le manchon de verrouillage 6 occupant la seconde position axiale P2. Dans cette seconde position du manchon de verrouillage 6, l'extrémité libre 101A de la patte 101 affleure maintenant l'embase femelle 4 et l'extrémité 102A de la patte 102 du manchon 6 est en retrait axial par rapport à l'embase femelle 4. Comme on peut le voir sur la figure 12, les pattes 101,102 sont bloquées dans cette position par les crans 105,106 qui coopèrent maintenant respectivement avec d'une part une encoche 109 en forme de fente aménagée dans la patte 101 au-dessus de l'encoche 108, et d'autre part avec l'extrémité libre 102A de la patte 102, ce qui bloque le déplacement du manchon 6 selon la direction axiale A en position P2.

Comme décrit précédemment en correspondance avec le connecteur 1, le déplacement du manchon de verrouillage 6 de la position P1 vers la position P2 et inversement nécessite d'exercer sur la patte 101 une certaine force axiale. La différence de hauteur entre les extrémités 101A,102A des pattes 101,102 du manchon 6 offre avantageusement une zone plane d'appui sur la surface 4D supérieure de l'embase femelle 4, servant à la mise en place du raccord 200 sur l'embout mâle 3.

Les dimensions respectives du cran 105 et des encoches 108,109 (de même que les dimensions respectives du cran 106, de l'encoche 107 et de l'extrémité 102A) sont ajustées pour correspondre à la course axiale du manchon entre les deux positions P1 et P2 ce qui équivaut sensiblement à l'épaisseur de l'agrafe 5 selon la direction axiale.

## Revendications

1. Raccord (2) de connecteur (1) pour conduits de fluide, comprenant une embase tubulaire femelle (4) dans laquelle est destiné à s'insérer selon une certaine direction axiale (A) un embout tubulaire mâle (3) pour réaliser un raccordement étanche, un organe de blocage (5) à déformation élastique pour bloquer l'embout (3) dans l'embase (4) quand l'embout (3) est suffisamment enfoncé dans l'embase (4) selon la direction axiale (A), et un manchon de verrouillage (6) qui est monté mobile selon la direction axiale (A) autour de l'organe de blocage (5) de telle façon à occuper une première position axiale (P1) dans laquelle il laisse l'organe de blocage (5) libre de se déformer radialement vers l'extérieur de l'embase (4) et une seconde position axiale (P2) dans laquelle il empêche la déformation radiale de l'organe de blocage (5), **caractérisé en ce que** l'organe de blocage (5) est un fil rigide en forme de C ayant deux extrémités libres (8A,8B) recourbées l'une vers l'autre aptes à traverser l'embase (4) quand il est déformé radialement, **en ce que** le manchon (6) présente au moins un renfoncement intérieur radial (12A,12B) dans lequel s'efface chaque extrémité libre (8A,8B) correspondante de l'organe de blocage (5) quand ce dernier est déformé radialement et que le manchon (6) occupe ladite première position axiale (P1), chaque renfoncement (12A.12B) étant décalé axialement par rapport à l'extrémité libre (8A,8B) correspondante de l'organe de blocage (5) quand le manchon (6) occupe ladite seconde position axiale (P2), ce qui empêche la déformation radiale de l'organe de blocage (5).

2. Raccord (2) selon la revendication 1, dans lequel l'organe de blocage (5) est un fil métallique.

3. Raccord (2) selon la revendication 1 ou 2, dans lequel le manchon de verrouillage (6) présente un corps tubulaire prolongé axialement par une patte (14 :101, 102) ; la patte ayant une extrémité libre (14A ;101A) qui saille par rapport à l'embase (4) quand le manchon (6) occupe ladite première position axiale (P1) et qui affleure l'embase (4) quand le manchon (6) occupe ladite seconde position axiale (P2).

4. Raccord (2) selon la revendication 3, dans lequel l'embase (4) présente au moins un cran (15 ;105,106) qui s'insère dans au moins une encoche (17 ;107,108,109) prévue sur la patte (14;101, 102) du manchon (6) quand le manchon (6) occupe ladite seconde position axiale (P2).

5. Raccord (2) selon l'une des revendications 1 à 4, dans lequel le manchon (6) comporte une fente radiale (9) pour une insertion latérale dudit organe de blocage (5) dans l'embase (4).

6. Connecteur (1) pour conduits de fluide, comprenant un embout tubulaire mâle (3) et un raccord (2) selon l'une des revendications précédentes.

7. Connecteur pour conduits de fluide selon la revendication 6, dans lequel le raccord (2) et l'embout tubulaire mâle (3) sont réalisés en matière plastique.

## Claims

1. Connector (2) for a fluid pipe connector assembly (1), comprising a tubular socket (4) into which a tubular plug (3) is intended to be inserted in an axial direction (A) to produce a fluid-tight connection, an elastically deformable locking member (5) for locking the plug (3) in the socket (4) when the plug (3) is sufficiently inserted in the socket (4) in the axial direction (A), and a latching sleeve (6) that is mounted around the locking member (5) so as to be mobile in the axial direction (A) so as to occupy a first axial position (P1) in which it allows the locking member (5) to deform radially toward the exterior of the socket (4) and a second axial position (P2) in which it prevents radial deformation of the locking member (5), **characterised in that** the locking member (5) is a C-shaped rigid wire having two ends (8A, 8B) bent toward each other and adapted to pass through the socket (4) when it is radially deformed, **in that** the sleeve (6) has at least one radial interior depression (12A, 12B) into which each corresponding free end (8A, 8B) of the locking member (5) retracts when the latter is deformed radially and the sleeve (6) occupies said first axial position (P1), each depression (12A, 12B) being offset axially relative to the corresponding free end (8A, 8B) of the locking member (5) when the sleeve (6) occupies said second axial position (P2) to prevent radial deformation of the locking member (5).

2. Connector (2) according to claim 1, wherein the locking member (5) is a metal wire.

3. Connector (2) according to claim 1 or 2, wherein the latching sleeve (6) has a tubular body extended axially by a lug (14; 101, 102) having a free end (14A; 101A) that projects relative to the socket (4) when the sleeve (6) occupies said first axial position (P1) and is flush with the socket (4) when the sleeve (6) occupies said second axial position (P2).

4. Connector (2) according to claim 3, wherein the socket (4) has at least one detent (15; 105, 106) that is inserted into at least one notch (17; 107, 108, 109) provided on the lug (14; 101, 102) of the sleeve (6) when the sleeve (6) occupies said second axial position (P2).

5. Connector (2) according to any of claims 1 to 4, wherein the sleeve (6) includes a radial slot for lateral insertion of said locking member (5) in the socket (4).

6. Fluid pipe connector assembly (1) comprising a tubular plug (3) and a connector (2) according to any of the preceding claims.

7. Fluid pipe connector assembly according to claim 6 wherein the connector (2) and the tubular plug (3) are produced in plastic material.

## Patentansprüche

1. Verbindungsteil (2) für eine Kupplung (1) für Fluidleitungen, das über einen röhrenartigen Aufnahmesockel (4), in den in eine bestimmte axiale Richtung (A) die Einführung eines röhrenartigen Steckanschlussteil (3) vorgesehen ist, um eine dichte Verbindung herzustellen, über ein Klemmteil (5) mit elastischer Verformung zum Festklemmen des Anschlussteils (3) in dem Sockel (4), wenn das Anschlussteil (3) ausreichend in den Sockel (4) in der axialen Richtung (A) eingesteckt ist, und über eine Verriegelungshülse (6) verfügt, die in der axialen Richtung (A) beweglich um das Klemmteil (5) herum derart angebracht ist, dass sie eine erste axiale Stellung (P1), in der sie dem Klemmteil (5) erlaubt, sich radial in Richtung der Außenseite des Sockels (4) zu verformen, und eine zweite axiale Stellung (P2) einnimmt, in der sie eine radiale Verformung des Klemmteils (5) verhindert, **dadurch gekennzeichnet, dass** das Klemmteil (5) ein C-förmiger steifer Draht ist, der zwei freie Enden (8A, 8B) aufweist, die zueinander umgebogen und dazu eingerichtet sind, den Sockel (4) zu durchqueren, wenn er radial verformt ist, dass die Hülse (6) wenigstens eine innere radiale Vertiefung (12A, 12B) aufweist, in die sich jedes dazugehörige freie Ende (8A, 8B) des Klemmteils (5) einfügt, wenn dieses radial verformt ist, und dass die Hülse (6) die erste axiale Stellung (P1) einnimmt, wobei jede Vertiefung (12A, 12B) axial in Bezug auf das dazugehörige freie Ende (8A, 8B) des Klemmteils (5) versetzt ist, wenn die Hülse (6) die zweite axiale Stellung (P2) einnimmt, was die radiale Verformung des Klemmteils (5) verhindert.

2. Verbindungsteil (2) nach Anspruch 1, bei dem das Klemmteil (5) ein Metalldraht ist.

3. Verbindungsteil (2) nach Anspruch 1 oder 2, bei dem die Verriegelungshülse (6) einen röhrenartigen Körper aufweist, der axial durch eine Zunge (14; 101, 102) verlängert ist, wobei die Zunge ein freies Ende (14A; 101A) aufweist, das mit Bezug auf den Sockel (4) vorsteht, wenn die Hülse (6) die erste axiale Stellung (P1) einnimmt, und das genau an dem Sockel (4) anliegt, wenn die Hülse (6) die zweite axiale Stellung (P2) einnimmt.

4. Verbindungsteil (2) nach Anspruch 3, bei dem der Sockel (4) wenigstens eine Kerbe (15; 105, 106) aufweist, die sich in wenigstens eine an der Zunge (14; 101, 102) der Hülse (6) vorgesehene Nut (17; 107, 108, 109) einfügt, wenn die Hülse (6) die zweite axiale Stellung (P2) einnimmt.

5. Verbindungsteil (2) nach einem der Ansprüche 1 bis 4, bei dem die Hülse (6) einen radialen Spalt (9) für ein seitliches Einführen des Klemmteils (5) in den Sockel (4) aufweist.

6. Kupplung (1) für Fluidleitungen, die ein röhrenartiges Steckanschlussteil (3) und ein Verbindungsteil (2) nach einem der vorangehenden Ansprüche aufweist.

7. Kupplung für Fluidleitungen nach Anspruch 6, bei der das Verbindungsteil (2) und das röhrenartige Steckanschlussteil (3) aus einem Kunststoffmaterial gefertigt sind.
